# EUROPÄISCHE PATENTSCHRIFT

(11) **EP 2 427 674 B1**
(45) Veröffentlichungstag und Bekanntmachung des Hinweises auf die Patenterteilung: **20.03.2013**
(21) Anmeldenummer: 10710233.7
(22) Anmeldetag: 20.03.2010
(51) Int. Cl.: F16H 57/04, F16H 61/00

(54) **ANTRIEBSSTRANGVORRICHTUNG**
DRIVE TRAIN DEVICE
DISPOSITIF DE CHAÎNE CINÉMATIQUE

(30) Priorität: 05.05.2009 DE 102009019959
(43) Veröffentlichungstag der Anmeldung: 14.03.2012
(73) Patentinhaber: Daimler AG, 70327 Stuttgart (DE)
(72) Erfinder: BARAGA, Michael, 70327 Stuttgart (DE); JÄGGLE, Gerd, 71576 Burgstetten (DE); HENZLER, Steffen, 73560 Böblingen (DE)
(74) Vertreter: JENSEN & SON
(86) Internationale Anmeldenummer: PCT/EP2010/001758
(87) Internationale Veröffentlichungsnummer: WO 2010/127740

(56) Entgegenhaltungen:
- EP-A1- 1 316 727
- WO-A1-03/087627
- WO-A1-2007/096719
- WO-A1-2008/052502
- DE-A1- 4 134 268
- DE-A1-102008 008 454
- JP-A- 2007 170 462
- US-A1- 2007 240 919
- US-A1- 2009 071 142
- US-A1- 2009 096 307

## Beschreibung

Die Erfindung betrifft eine Antriebsstrangvorrichtung nach dem Oberbegriff des Anspruchs 1.

Aus der gattungsgemäßen Druckschrift DE 41 34 268 A1 ist bereits eine Antriebsstrangvorrichtung, insbesondere eine Kraftfahrzeugantriebsstrangvorrichtung, mit einem Arbeitsdrucksystem, das für einen Betriebsmitteldruck vorgesehen ist und mit zumindest einer ersten und einer zweiten Betriebsmitteldruckquelle, die in zumindest einem Betriebszustand jeweils direkt mit dem Arbeitsdrucksystem verbunden sind, bekannt.

Die JP 2007-170462 A1 beschreibt eine Antriebsstrangvorrichtung mit zwei Betriebsmittelquellen in Form zweier Pumpen. Eine von einem Verbrennungsmotor angetriebene erste Pumpe ist mit einem Arbeitsdrucksystem verbunden. Eine von einem Elektromotor angetriebene zweite Pumpe kann über ein Rückschlagventil ebenfalls mit dem Arbeitsdrucksystem verbunden sein. Dies ist dann der Fall, wenn der Verbrennungsmotor, der die erste Pumpe antreibt, steht. Die zweite Pumpe kann auch über ein Ventil Öl in ein Kühldrucksystem fördern. Das Ventil ist dabei so ausgeführt, dass es unabhängig von einem Druck im Arbeitsdrucksystem öffnet und schließt.

Der Erfindung liegt insbesondere die Aufgabe zugrunde, eine Betriebssicherheit der Antriebsstrangvorrichtung zu erhöhen. Sie wird gemäß der Erfindung durch die Merkmale des Anspruchs 1 gelöst. Weitere Ausgestaltungen ergeben sich aus den Unteransprüchen.

Die Erfindung geht aus von einer Antriebsstrangvorrichtung, insbesondere Kraftfahrzeugantriebsstrangvorrichtung, mit einem Arbeitsdrucksystem, das für einen Betriebsmitteldruck vorgesehen ist, mit zumindest einer ersten und einer zweiten Betriebsmitteldruckquelle, die in zumindest einem Betriebszustand jeweils direkt mit dem Arbeitsdrucksystem verbunden sind, und mit einem Schmier- und/oder Kühldrucksystem, das für einen von dem Betriebsmitteldruck im Arbeitsdrucksystem abweichenden Betriebsmitteldruck im Schmier- und/oder Kühldrucksystem vorgesehen ist.

Die Antriebsstrangvorrichtung umfasst eine hydraulische Schalteinheit, die in zumindest einem Betriebszustand dazu vorgesehen ist, die zweite Betriebsmitteldruckquelle direkt mit dem Schmier- und/oder Kühldrucksystem zu verbinden. Dadurch kann eine Unterstützung für eine Versorgung des Schmier- und/oder Kühldrucksystems durch die zweite Betriebsmitteldruckquelle verbessert werden, wodurch eine Dimensionierung der ersten Betriebsmitteldruckquelle, die vorteilhafterweise als eine Betriebsmittelpumpe ausgebildet ist, verringert werden kann. Insbesondere bei einem hohen Betriebsmitteldruck in dem Arbeitsdrucksystem kann die zweite Betriebsmitteldruckquelle direkt das Schmier- und/oder Kühldrucksystem mit Betriebsmittel versorgen, wodurch eine Unterversorgung des Schmier- und/oder Kühldrucksystems vorteilhaft vermieden werden kann. Mittels der Schalteinheit kann somit eine Betriebssicherheit der Antriebsstrangvorrichtung erhöht werden. Unter einem "Arbeitsdrucksystem" soll insbesondere ein System aus hydraulischen Betriebsmittelleitungen verstanden werden, die hydraulisch miteinander verbunden sind und die in einem hydrostatischen Betriebszustand im Wesentlichen den gleichen Druck aufweisen. Vorzugsweise ist das Arbeitsdrucksystem zur Versorgung von hydraulischen Betätigungsaktuatoren der Antriebsstrangvorrichtung vorgesehen, wie beispielsweise für Aktuatoren zur Schaltung von Kupplungen und/oder Bremsen. Unter einem "Schmier- und/oder Kühldrucksystem" soll insbesondere ein weiteres System aus hydraulischen Betriebsmittelleitungen verstanden werden, das prinzipiell von dem Arbeitsdrucksystem getrennt ist. Unter einer "hydraulischen Schalteinheit" soll insbesondere eine Einheit verstanden werden, die dazu vorgesehen ist, einen Betriebsmitteldruck und/oder eine Betriebsmittelverschaltung zu ändern und/oder einzustellen. Unter "vorgesehen" soll insbesondere speziell ausgebildet und/oder ausgestattet verstanden werden.

Erfindungsgemäß weist die hydraulische Schalteinheit ein Schaltventil auf, das dazu vorgesehen ist, die zweite Betriebsmitteldruckquelle in Abhängigkeit von einem Betriebsmitteldruck in dem Arbeitsdrucksystem direkt mit dem Schmier- und/oder Kühldrucksystem zu verbinden. Dadurch kann die direkte Verbindung der zweiten Betriebsmitteldruckquelle mit dem Schmier- und/oder Kühldrucksystem vorteilhaft in Abhängigkeit von dem aktuellen Betriebszustand geschaltet werden, wodurch insbesondere konstante Druckverhältnisse für eine Antriebsstrangvorrichtung mit einer Wandlereinheit erreicht werden können.

Weiter wird vorgeschlagen, dass das Schaltventil dazu vorgesehen ist, die zweite Betriebsmitteldruckquelle permanent direkt mit dem Arbeitsdrucksystem zu verbinden. Dadurch kann die zweite Betriebsmitteldruckquelle dem Arbeitsdrucksystem unabhängig von einer Schaltstellung des Schaltventils Betriebsmittel zuführen, wodurch die erste Betriebsmitteldruckquelle vorteilhaft entlastet werden kann.

In einer besonders vorteilhaften Ausgestaltung ist das Schaltventil dazu vorgesehen, die zweite Betriebsmitteldruckquelle schaltbar direkt mit dem Schmier- und/oder Kühldrucksystem zu verbinden. Dadurch kann, je nach Bedarf, zwischen dem Arbeitsdrucksystem und dem Schmier- und/oder Kühldrucksystem geschaltet werden und damit die Unterstützung der ersten Betriebsmitteldruckquelle vorteilhaft auf einen aktuellen Betriebszustand angepasst werden.

Insbesondere ist es vorteilhaft, wenn das Schaltventil dazu vorgesehen ist, selbstständig zu schalten. Dadurch kann auf eine aufwendige Steuerung der Schalteinheit, beispielsweise mittels einer elektrischen und/oder elektronischen Steuer- und/oder Regeleinheit, verzichtet werden, wodurch eine kompakte und einfache Ausgestaltung möglich ist. Unter "selbstständig" soll dabei insbesondere verstanden werden, dass das Schaltventil unabhängig von einer externen Energieversorgung, wie beispielsweise einer elektrischen Energieversorgung, ist, wobei unter einer "externen Energieversorgung" eine von einer hydraulischen Energieversorgung abweichende Energieversorgung verstanden werden soll. Vorteilhafterweise schaltet das Schaltventil selbstständig in Abhängigkeit von dem Betriebsmitteldruck in dem Arbeitsdrucksystem, wobei ein definierter Grenzdruck zum Schalten des Schaltventils beispielsweise 15 bar beträgt.

Ferner ist es vorteilhaft, wenn die Schalteinheit ein Ventilfedereinstellmittel aufweist, das dazu vorgesehen ist, einen Grenzdruck zum Schalten des Schaltventils einzustellen. Dadurch können Toleranzen, die beispielsweise durch eine Fertigung des Schaltventils bedingt sind, vorteilhaft ausgeglichen werden und es kann der definierte Grenzdruck zum Schalten des Schaltventils einfach eingestellt werden.

In einer weiteren erfindungsgemäßen Ausgestaltung wird vorgeschlagen, dass die Schalteinheit zumindest ein zwischen dem Arbeitsdrucksystem und dem Schaltventil angeordnetes Rückschlagventil aufweist, das dazu vorgesehen ist, einen Betriebsmittelstrom in Richtung des Schaltventils zu verhindern. Dadurch kann ein Rückstrom des Betriebsmittels aus dem Arbeitsdrucksystem in das Schaltventil verhindert werden, wodurch sowohl ein Betriebsmittelstrom von dem Arbeitdrucksystem in die zweite Betriebsmitteldruckquelle als auch in das Schmier- und/oder Kühldrucksystem vermieden werden kann. Grundsätzlich kann alternativ zu dem Rückschlagventil auch ein Schaltventil verwendet werden.

Insbesondere ist es vorteilhaft, wenn die Schalteinheit zumindest ein zwischen dem Schmier- und/oder Kühldrucksystem und dem Schaltventil angeordnetes Rückschlagventil aufweist, das dazu vorgesehen ist, einen Betriebsmittelstrom in Richtung des Schaltventils zu verhindern. Dadurch kann ein Rückstrom des Betriebsmittels aus dem Schmier- und/oder Kühldrucksystem in das Schaltventil verhindert werden, wodurch sowohl ein Betriebsmittelstrom von dem Schmier- und/oder Kühldrucksystem in die zweite Betriebsmitteldruckquelle als auch in das Arbeitsdrucksystem vermieden werden kann. Grundsätzlich kann auch das zweite Rückschlagventil durch ein Schaltventil ersetzt werden.

Ebenfalls vorteilhaft ist, wenn die zweite Betriebsmitteldruckquelle als eine eigenständig angetriebene Betriebsmittelpumpe ausgebildet ist, die dazu vorgesehen ist, einen steuer- und/oder regelbaren Betriebsmitteldruck bereitzustellen. Dadurch kann die zweite Betriebsmitteldruckquelle insbesondere unabhängig von der ersten Betriebsmitteldruckquelle eingestellt werden bzw. Betriebsmittel zur Verfügung stellen.

Außerdem wird vorgeschlagen, dass die Antriebsstrangvorrichtung eine Steuer- und/oder Regeleinheit aufweist, die dazu vorgesehen ist, den Betriebsmitteldruck der zweiten Betriebsmitteldruckquelle in Abhängigkeit von einem Bedarfskennfeld, einzustellen. Dadurch kann ein bedarfsgerechter Betrieb der zweiten Betriebmittelquelle erreicht werden.

In einer weiteren erfindungsgemäßen Ausgestaltung wird vorgeschlagen, dass die Steuer- und/oder Regeleinheit dazu vorgesehen ist, das Bedarfskennfeld an eine Zustandsänderung dem Schmier- und/oder Kühldrucksystem anzupassen. Dadurch kann das Schmier- und/oder Kühldrucksystem vorteilhaft an Zustandsänderungen angepasst werden, wie beispielsweise Verschleiß und/oder Toleranzschwankungen.

Weiter wird vorgeschlagen, dass die Antriebsstrangvorrichtung eine Sensoreinheit aufweist, die dazu vorgesehen ist, einen Parameter zur Anpassung des Bedarfskennfelds bereitzustellen. Dadurch kann die Steuereinheit das Bedarfskennfeld vorteilhaft an Veränderungen, beispielsweise verschließbedingte Veränderungen anpassen.

In einer weiteren Ausgestaltung wird vorgeschlagen, dass die Antriebsstrangvorrichtung eine weitere hydraulische Schalteinheit aufweist, die dazu vorgesehen ist, eine Betriebsmittelüberschussmenge des Arbeitsdrucksystems dem Schmier- und/oder Kühldrucksystem zuzuführen. Dadurch kann ein Betriebsmitteldruck in dem Arbeitdrucksystem besonders zuverlässig bereitgestellt werden. Unter einer "Betriebsmittelüberschussmenge des Arbeitsdrucksystems" soll dabei insbesondere eine Betriebsmittelmenge verstanden werden, die zusätzlich zu einem Betriebsmittelbedarf der Betätigungsaktuatoren, die mittels des Arbeitsdrucksystems versorgt werden, in das Arbeitsdrucksystem eingebracht wird. Insbesondere soll darunter eine Betriebsmittelmenge verstanden werden, die nicht in dem Arbeitsdrucksystem benötigt wird.

Vorteilhafterweise weist die Antriebstrangvorrichtung weiter einen hydraulischen Schmierdruckregelschieber auf, der dazu vorgesehen ist, ein Schmier- und/oder Kühlniederdrucksystem an das Schmier- und/oder Kühldrucksystem anzubinden. Dadurch kann in dem Schmier- und/oder Kühlniederdrucksystem ein vorteilhaft konstanter Betriebsmitteldruck eingestellt werden.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine Antriebsstrangvorrichtung für ein Kraftfahrzeug und
- Fig. 2: schematisch ein Arbeitsdrucksystem und ein Schmier- und Kühldrucksystem für die Antriebsstrangvorrichtung aus Fig. 1.

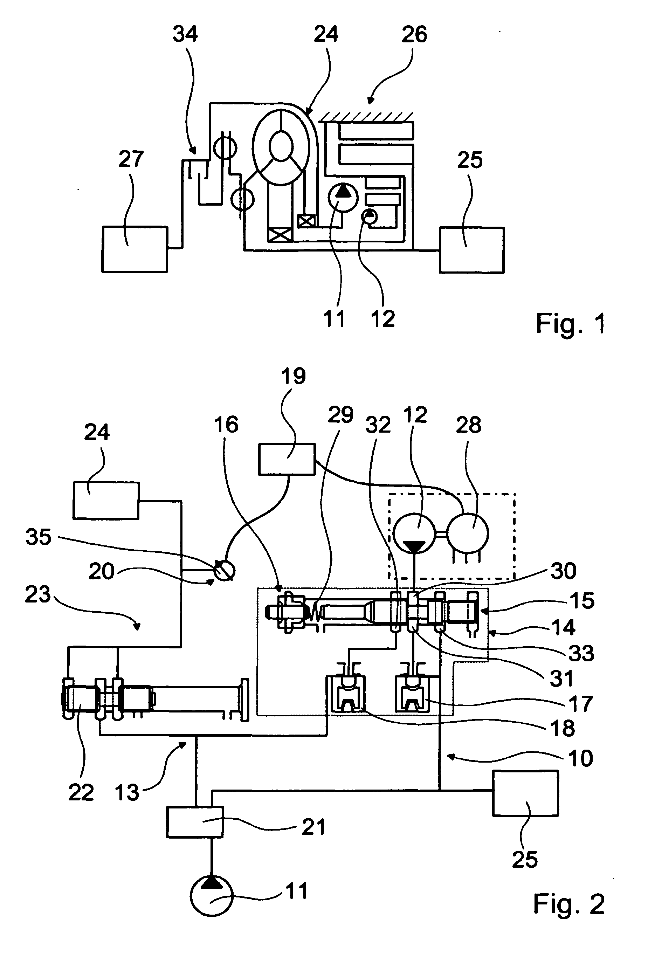

Figur 1 zeigt eine beispielhafte Antriebsstrangvorrichtung. Die Antriebsstrangvorrichtung ist als eine Kraftfahrzeugantriebsstrangvorrichtung ausgebildet. Die Antriebsstrangvorrichtung umfasst eine Wandlereinheit 24 und eine Getriebeeinheit 25. Außerdem umfasst die Antriebsstrangvorrichtung eine Hybridantriebseinheit 26. Die Hybridantriebseinheit 26 ist in einem Kraftfluss zwischen einer Brennkraftmaschine 27 und der Getriebeeinheit 25 angeordnet. Die Hybridantriebseinheit 26 stellt einen Boost-Modus, einen Rekuperations-Modus und einen elektrischen Fahrmodus bereit.

Zur Schaltung von Getriebegängen umfasst die Getriebeeinheit 25 hydraulisch betätigte, nicht näher dargestellte Getriebeschalteinheiten. Die Antriebsstrangvorrichtung umfasst ein Arbeitsdrucksystem 10 mit Betriebsmittelleitungen, die hydraulisch miteinander verbunden sind und die in einem hydrostatischen Betriebszustand einen im Wesentlichen gleichen Betriebsmitteldruck aufweisen (vgl. Figur 2). Zur Betätigung der Getriebeschalteinheit weist die Getriebeeinheit 25 hydraulische Betätigungsaktuatoren auf, die mittels des Arbeitsdrucksystems 10 mit einem Betriebsmitteldruck beaufschlagt werden können. Die Getriebeschalteinheiten sind als Kupplungen oder Bremsen ausgebildet.

Außerdem umfasst die Antriebsstrangvorrichtung ein Schmier- und Kühldrucksystem 13. Das Schmier- und Kühldrucksystem 13 umfasst hydraulisch miteinander verbundene Betriebsmittelleitungen, die in einem hydrostatischen Betriebszustand einen im Wesentlichen gleichen Betriebsmitteldruck aufweisen. Das Schmier- und Kühldrucksystem 13 und das Arbeitsdrucksystem 10 sind hydraulisch voneinander entkoppelbar. Der Betriebsmitteldruck des Schmier- und Kühldrucksystems 13 und der Betriebsmitteldruck des Arbeitsdrucksystems 10 können voneinander abweichen. Das Schmier- und Kühldrucksystem 13 versorgt die Wandlereinheit 24 und die Getriebeeinheit 25 mit dem Betriebsmittel, das als ein Schmier- und Kühlmittel und als ein Druckmittel ausgebildet ist. Außerdem versorgt das Schmier- und Kühldrucksystem 13 eine Wandlerüberbrückungskupplung 34 der Wandlereinheit 24.

Weiter umfasst die Antriebsstrangvorrichtung ein Schmier- und Kühlniederdrucksystem 23. Das Schmier- und Kühlniederdrucksystem 23 umfasst hydraulisch miteinander verbundene Betriebsmittelleitungen, die direkt über eine Schmier- bzw. Kühlleitung mit den zu schmierenden bzw. zu kühlenden Bauteilen verbunden sind, wie beispielsweise der Wandlereinheit 24, der Getriebeeinheit 25 und der Wandlerüberbrückungskupplung. Das Schmier- und Kühlniederdrucksystem 23 stellt zudem einen Betätigungsdruck für die Wandlerüberbrückungskupplung 34 bereit. Das Schmier- und Kühlniederdrucksystem 23 ist mittels eines hydraulischen Schmierdruckregelschiebers 22 an das Schmier- und Kühldrucksystem 13 angebunden. Der Schmierdruckregeischieber 22 stellt einen Betriebsmitteldruck in dem Schmier- und Kühlniederdrucksystem 23 ein.

Zur Bereitstellung des Betriebsmitteldrucks in dem Arbeitsdrucksystem 10 und des Betriebsmitteldrucks in dem Schmier- und Kühldrucksystem 13 umfasst die Antriebsstrangvorrichtung eine erste Betriebsmitteldruckquelle 11 und eine zweite Betriebsmitteldruckquelle 12. Die erste Betriebsmitteldruckquelle 11 ist als eine Hauptpumpe ausgestaltet, und stellt eine Grundversorgung für das Arbeitsdrucksystem 10 mit dem Betriebsmittel bereit. Die erste Betriebsmitteldruckquelle 11 wird durch die Brennkraftmaschine 27 und/oder die Hybridantriebseinheit 26 angetrieben. Die erste Betriebsmitteldruckquelle 11 ist permanent mit der Brennkraftmaschine 27 und/oder der Hybridantriebseinheit 26 verbunden. Ein von der ersten Betriebsmitteldruckquelle 11 bereitgestellter Betriebmitteldruck hängt von einer Drehzahl der Brennkraftmaschine 27 und/oder der Hybridantriebseinheit 26 ab.

Die zweite Betriebsmitteldruckquelle 12 ist als eine Zusatzpumpe ausgebildet, die in definierten Betriebszuständen zur Unterstützung der ersten Betriebsmitteldruckquelle 11 vorgesehen ist. Die zweite Betriebsmitteldruckquelle 12 ist als eigenständig angetriebene Betriebsmittelpumpe ausgebildet, die unabhängig von der ersten Betriebsmitteldruckquelle 11 eingestellt werden kann. Die zweite Betriebsmitteldruckquelle 12 weist einen elektrischen Motor 28 auf, mittels dem ein von der zweiten Betriebsmitteldruckquelle 12 bereitgestellter Betriebsmitteldruck eingestellt werden kann. Der Betriebsmitteldruck der zweiten Betriebsmitteldruckquelle 12 wird über eine Drehzahl des Motors 28 eingestellt.

Zur Einstellung des Betriebsmitteldrucks in dem Arbeitsdrucksystem 10 weist die Antriebsstrangvorrichtung eine lediglich schematisch dargestellte erste hydraulische Schalteinheit 21 auf, die direkt mit der ersten Betriebsmitteldruckquelle 11 verbunden ist. Die Schalteinheit 21 verbindet die erste Betriebsmitteldruckquelle 11 permanent mit dem Arbeitsdrucksystem 10, wodurch der Betriebsmitteldruck in dem Arbeitsdrucksystem 10 im Wesentlichen dem von der ersten Betriebsmitteldruckquelle 11 bereitgestellten Betriebsmitteldruck entspricht. Außerdem ist die erste Schalteinheit 21 dazu vorgesehen ist, eine in dem Arbeitdrucksystem 10 bereitstehende Betriebsmittelüberschussmenge in das Schmier- und Kühldrucksystem 13 zu leiten.

Weiter weist die Antriebsstrangvorrichtung eine zweite hydraulische Schalteinheit 14 auf, die direkt mit der zweiten Betriebsmitteldruckquelle 12 verbunden ist. In einem ersten Betriebszustand verbindet die Schalteinheit 14 die zweite Betriebsmitteldruckquelle 12 direkt mit dem Arbeitsdrucksystem 10. In einem zweiten Betriebszustand verbindet die Schalteinheit 14 die zweite Betriebsmitteldruckquelle 12 direkt mit dem Arbeitsdrucksystem 10 und mit dem Schmier- und Kühldrucksystem 13.

Zur Verbindung der zweiten Betriebsmitteldruckquelle 12 mit dem Arbeitsdrucksystem 10 bzw. dem Schmier- und Kühldrucksystem 13 weist die Schalteinheit 14 ein Schaltventil 15 auf, das als ein 3/2-Wege-Ventil ausgebildet ist. Das Schaltventil 15 ist als ein Proportionalventil ausgebildet, das die zweite Betriebsmitteldruckquelle 12 in einer ersten Schaltstellung direkt mit dem Arbeitsdrucksystem 10 und in einer zweiten Schaltstellung direkt mit dem Schmier- und Kühldrucksystem 13 und dem Arbeitsdrucksystem 10 verbindet. Ein Betätigungsaktuator des Schaltventils 15 ist als ein hydraulischer Aktuator ausgebildet. Der Betätigungsaktuator ist mit dem Arbeitsdrucksystem 10 verbunden. Der Betätigungsaktuator schaltet das Schaltventil 15 in Abhängigkeit von dem Betriebsmitteldruck in dem Arbeitsdrucksystem 10, der im Wesentlichen mittels der ersten Betriebsmitteldruckquelle 11 in dem Arbeitdrucksystem 10 eingestellt ist.

Das Schaltventil 15 weist einen Ventilkolben auf, der in einem Ventilbereich zur Ausbildung des Wegeventils vorgesehen ist. Zur Ausbildung des Betätigungsaktuators weist der Ventilkolben ein Druckvolumen auf. Zur Einstellung eines Schaltpunkts weist das Schaltventil ein Federmittel 29 auf, das komplementär zu dem Druckvolumen angeordnet ist. Das Schaltventil 15 weist vier Betriebsmittelanschlüsse 30, 31, 32, 33 auf. Der erste Betriebsmittelanschluss 30 des Schaltventils 15 ist direkt mit der zweiten Betriebsmitteldruckquelle 12 verbunden. Der zweite Betriebsmittelanschluss 31 des Schaltventils 15 ist zur Anbindung an das Arbeitsdrucksystem 10 vorgesehen. Der dritte Betriebsmittelanschluss 32 des Schaltventils 15 ist zur Anbindung an das Schmier- und Kühldrucksystem 13 vorgesehen. Das Druckvolumen für den Betätigungsaktuator ist mit dem Betriebsmittelanschluss 33 verbunden, der direkt mit dem Arbeitsdrucksystem 10 verbunden ist.

Zur Einstellung des Schaltventils 15 weist das Schaltventil 15 ein Ventilfedereinstellmittel 16 auf. Das Ventilfedereinstellmittel 16 ist wirkungsmäßig zwischen einem Ventilgehäuse und dem Federmittel 29 angeordnet. Über das Ventilfedereinstellmittel 16 kann eine Vorspannung des Federmittels 29 eingestellt werden. Da das Federmittel 29 komplementär zu dem Druckvolumen angeordnet ist, wird über die Vorspannung des Federmittels 29 ein Grenzdruck eingestellt, oberhalb von dem das Schaltventil 15 in die zweite Schaltstellung schaltet, in der es die zweite Betriebsmitteldruckquelle 12 direkt mit dem Schmier- und Kühldrucksystem 13 und dem Arbeitdrucksystem 10 verbindet. Zur Einstellung unterschiedlicher Grenzdrücke weist das Ventilfedereinstellmittel 16 eine Einstellscheibe auf, die eine geeignete Stärke aufweist. Zur Einstellung der Grenzdrücke kann die Einstellscheibe gegen eine andere Einstellscheibe ausgetauscht werden. In dem Ausführungsbeispiel beträgt der mittels des Ventilfedereinstellmittels 16 und des Federmittels 29 eingestellte Grenzdruck 15 bar.

In einem Betriebszustand, in dem ein Betriebsmitteldruck in dem Druckvolumen den Grenzdruck überschreitet, schaltet das Schaltventil 15 selbstständig von der ersten Schaltstellung in die zweite Schaltstellung, in der drei Betriebsmittelanschlüsse 30, 31, 32 des Schaltventils 15 miteinander verbunden sind. In einem Betriebszustand, in dem der Betriebsmitteldruck in dem Druckvolumen kleiner ist als der Grenzdruck, schaltet das Schaltventil 15 selbstständig von der zweiten Schaltstellung in die erste Schaltstellung, in der lediglich die zwei Betriebsmittelanschlüsse 30, 31 des Schaltventils 15 miteinander verbunden sind.

Die hydraulische Schalteinheit 14 weist weiter zwei analog aufgebaute hydraulische Rückschlagventile 17, 18 auf. Das erste Rückschlagventil 17 ist zwischen dem Schaltventil 15 und dem Arbeitsdrucksystem 10 angeordnet. Das zweite Rückschlagventil 18 ist zwischen dem Schaltventil 15 und dem Schmier- und Kühldrucksystem 13 angeordnet. Das erste Rückschlagventil 17 verhindert einen Betriebsmittelstrom von dem Arbeitsdrucksystem 10 in Richtung des Schaltventils 15. In einem Betriebszustand, in dem ein Betriebsmitteldruck an dem zweiten Betriebsmitteldruckanschluss 31 des Schaltventils 15 den Betriebsmitteldruck des Arbeitsdrucksystems 10 überschreitet, öffnet das erste Rückschlagventil 17 und verbindet den zweiten Betriebsmittelanschluss 31 mit dem Arbeitsdrucksystem 10. In einem Betriebszustand, in dem der Betriebsmitteldruck des Arbeitsdrucksystems 10 den Betriebsmitteldruck an dem zweiten Betriebsmitteldruckanschluss 31 des Schaltventils 15 überschreitet, schließt das Rückschlagventil 17 und trennt den Betriebsmitteldruckanschluss 31 und das Arbeitsdrucksystem 10 voneinander.

Das zweite Rückschlagventil 18 verhindert einen Betriebsmittelstrom vom Schmier- und Kühldrucksystems 13 in Richtung des Schaltventils 15. In einem Betriebszustand, in dem ein Betriebsmitteldruck an dem dritten Betriebsmitteldruckanschluss 32 des Schaltventils 15 den Betriebsmitteldruck des Schmier- und Kühldrucksystems 13 überschreitet, öffnet das zweite Rückschlagventil 18 und verbindet den dritten Betriebsmittelanschluss 32 mit dem Schmier- und Kühldrucksystem 13. In einem Betriebszustand, in dem der Betriebsmitteldruck des Schmier- und Kühldrucksystem 13 den Betriebsmitteldruck an dem dritten Betriebsmitteldruckanschluss 32 des Schaltventils 15 überschreitet, schließt das Rückschlagventil 18 und trennt den Betriebsmitteldruckanschluss 32 und das Schmier- und Kühldrucksystem 13 voneinander.

In einem Betriebszustand, in dem die erste Betriebsmitteldruckquelle 11 eine geringe Betriebsmittelüberschussmenge bereitstellt, trennt die erste Schalteinheit 21 die erste Betriebsmitteldruckquelle 11 und das Schmier- und Kühldrucksystem 13 im Wesentlichen voneinander. Weist in einem solchen Betriebszustand das Arbeitsdrucksystem 10 einen Betriebsmitteldruck auf, der über dem Grenzwert des Schaltventils 15 liegt, verbindet die zweite Schalteinheit 14 die zweite Betriebsmitteldruckquelle 12 direkt mit dem Schmier-und Kühldrucksystem 13 und die zweite Betriebsmitteldruckquelle 12 kann den Betriebsmitteldruck in dem Schmier- und Kühldrucksystem 13 erhöhen. Ein Betriebsmittelfluss von dem Schmier- und Kühldrucksystem 13 in das Arbeitdrucksystem 10 wird durch das zweite Rückschlagventil 18 verhindert.

Weist das Arbeitsdrucksystem 10 in dem Betriebszustand, in dem die erste Betriebsmitteldruckquelle 11 eine geringe Betriebsmittelüberschussmenge bereitstellt, einen Betriebsmitteldruck auf, der unter dem Grenzwert des Schaltventils 15 liegt, schaltet die zweite Schalteinheit 14 in die erste Schaltstellung, in der die zweite Betriebsmitteldruckquelle 12 lediglich mit dem Arbeitsdrucksystem 10 verbunden ist. In diesem Betriebszustand kann die zweite Betriebsmitteldruckquelle 12 den Betriebsmitteldruck in dem Arbeitsdrucksystem 10 erhöhen, wodurch auch die Betriebsmittelüberschussmenge in dem Arbeitsdrucksystem 10 erhöht wird. Über den Betriebsmitteldruck in dem Arbeitsdrucksystem 10 kann die zweite Betriebsmitteldruckquelle 12 somit indirekt den Betriebsmitteldruck in dem Schmier- und Kühldrucksystem 13 erhöhen.

In einem Betriebszustand, in dem die erste Betriebsmitteldruckquelle 11 eine hohe Betriebsmittelüberschussmenge bereitstellt, verbindet die erste Schalteinheit 21 die erste Betriebsmitteldruckquelle 11 und das Schmier- und Kühldrucksystem 13 miteinander. In einem solchen Betriebszustand kann die zweite Betriebsmitteldruckquelle 12 die erste Betriebsmitteldruckquelle 11 unterstützen. Bei einer ausreichenden Betriebsmittelversorgung durch die erste Betriebsmitteldruckquelle wird in einem solchen Betriebszustand eine Drehzahl der zweiten Betriebsmitteldruckquelle 12 reduziert. Das Arbeitsdrucksystem 10 und das Schmier- und Kühldrucksystem 13 wird dann im Wesentlichen mittels der ersten Betriebsmitteldruckquelle 11 versorgt.

Zur Einstellung der zweiten Betriebsmitteldruckquelle 12 weist die Antriebsstrangvorrichtung eine Steuer- und Regeleinheit 19 auf. Mit der Steuer- und Regeleinheit 19 wird mit Abhängigkeit von einem Bedarfskennfeld der Betriebsmitteldruck der zweiten Betriebsmitteldruckquelle 12 eingestellt. Das Bedarfskennfeld ist in einer Speichereinheit der Steuer-und Regeleinheit 19 hinterlegt. Das Bedarfskennfeld beschreibt die Betriebsmittelüberschussmenge in Abhängigkeit von einem aktuellen Betriebszustand. Der Betriebszustand hängt im Wesentlichen von einer Drehzahl der Brennkraftmaschine 27 und/oder der Hybridantriebseinheit 26 und von einem von der Brennkraftmaschine 27 und/oder der Hybridantriebseinheit 26 abgegeben Antriebsmoment ab. Die Drehzahl bedingt einen Betriebsmitteldruck und eine Betriebsmittelmenge, die von der ersten Betriebsmitteldruckquelle 11 bereitgestellt wird. Das Antriebsmoment bedingt einen Betriebsmittelbedarf der Getriebeschalteinheiten der Getriebeeinheit 25. Die Steuer- und Regeleinheit 19 stellt eine Drehzahl, mit der die zweite Betriebsmitteldruckquelle 12 beaufschlagt wird, in Abhängigkeit von dem Bedarfskennfeld ein.

Zur Bereitstellung eines Parameters zur Anpassung des Bedarfskennfelds weist das Schmier- und Kühlniederdrucksystem 23 eine Sensoreinheit 20 auf. Die Sensoreinheit 20 umfasst einen Drucksensor 35. Die Steuer- und Regeleinheit 19 wertet den von der Sensoreinheit 20 bereitgestellten Parameter aus und passt in Abhängigkeit von dem Parameter das Bedarfskennfeld zur Einstellung der zweiten Betriebsmitteldruckquelle 12 an.

## Patentansprüche

1. Antriebsstrangvorrichtung, insbesondere Kraftfahrzeugantriebsstrangvorrichtung, mit einem Arbeitsdrucksystem (10), das für einen Betriebsmitteldruck vorgesehen ist, mit zumindest einer ersten und einer zweiten Betriebsmitteldruckquelle (11, 12), die in zumindest einem Betriebszustand jeweils direkt mit dem Arbeitsdrucksystem (10) verbunden sind, und mit einem Schmier- und/oder Kühldrucksystem (13), das für einen von dem Betriebsmitteldruck im Arbeitsdrucksystem (10) abweichenden Betriebsmitteldruck im Schmier- und/oder Kühldrucksystem (13) vorgesehen ist, und eine hydraulische Schalteinheit (14), die in zumindest einem Betriebszustand dazu vorgesehen ist, die zweite Betriebsmitteldruckquelle (12) direkt mit dem Schmier- und/oder Kühldrucksystem (13) zu verbinden
**dadurch gekennzeichnet, dass**
die hydraulische Schalteinheit (14) ein Schaltventil (15) aufweist, welches dazu vorgesehen ist, die zweite Betriebsmitteldruckquelle (12) in Abhängigkeit von einem Betriebsmitteldruck in dem Arbeitsdrucksystem (10) direkt mit dem Schmier- und/oder Kühldrucksystem (13) zu verbinden.

2. Antriebsstrangvorrichtung nach Anspruch 1,
**dadurch gekennzeichnet, dass**
das Schaltventil (15) dazu vorgesehen ist, die zweite Betriebsmitteldruckquelle (12) permanent direkt mit dem Arbeitsdrucksystem (10) zu verbinden.

3. Antriebsstrangvorrichtung nach Anspruch 1 oder 2,
**dadurch gekennzeichnet, dass**
das Schaltventil (15) dazu vorgesehen ist, die zweite Betriebsmitteldruckquelle (12) schaltbar direkt mit dem Schmier- und/oder Kühldrucksystem (13) zu verbinden.

4. Antriebsstrangvorrichtung zumindest nach Anspruch 1,
**dadurch gekennzeichnet, dass**
das Schaltventil (15) dazu vorgesehen ist, selbstständig zu schalten.

5. Antriebsstrangvorrichtung zumindest nach Anspruch 1,
**dadurch gekennzeichnet, dass**
die Schalteinheit (14) ein Ventilfedereinstellmittel (16) aufweist, das dazu vorgesehen ist, einen Grenzdruck zum Schalten des Schaltventils (15) einzustellen.

6. Antriebsstrangvorrichtung nach einem der vorhergehenden Ansprüche,
**dadurch gekennzeichnet, dass**
die Schalteinheit (14) zumindest ein zwischen dem Arbeitsdrucksystem (10) und dem Schaltventil (15) angeordnetes Rückschlagventil (17) aufweist, das dazu vorgesehen ist, einen Betriebsmittelstrom in Richtung des Schaltventils (15) zu verhindern.

7. Antriebsstrangvorrichtung nach einem der vorhergehenden Ansprüche,
**dadurch gekennzeichnet, dass**
die Schalteinheit (14) zumindest ein zwischen dem Schmier- und/oder Kühldrucksystem (13) und dem Schaltventil (15) angeordnetes Rückschlagventil (18) aufweist, das dazu vorgesehen ist, einen Betriebsmittelstrom in Richtung des Schaltventils (15) zu verhindern.

8. Antriebsstrangvorrichtung nach einem der vorhergehenden Ansprüche,
**dadurch gekennzeichnet, dass**
die zweite Betriebsmitteldruckquelle (12) als eine eigenständig angetriebene Betriebsmittelpumpe ausgebildet ist, die dazu vorgesehen ist, einen steuer- und/oder regelbaren Betriebsmitteldruck bereitzustellen.

9. Antriebsstrangvorrichtung nach einem der vorhergehenden Ansprüche,
**gekennzeichnet durch**
eine Steuer- und/oder Regeleinheit (19), die dazu vorgesehen ist, einen Betriebsmitteldruck der zweiten Betriebsmitteldruckquelle (12) in Abhängigkeit von einem Bedarfskennfeld einzustellen.

10. Antriebsstrangvorrichtung nach Anspruch 9,
**dadurch gekennzeichnet, dass**
die Steuer- und/oder Regeleinheit (19) dazu vorgesehen ist, das Bedarfskennfeld an eine Zustandsänderung dem Schmier- und/oder Kühldrucksystem (13) anzupassen.

11. Antriebsstrangvorrichtung nach Anspruch 10,
**gekennzeichnet durch**
eine Sensoreinheit (20), die dazu vorgesehen ist, einen Parameter zur Anpassung des Bedarfskennfelds bereitzustellen.

12. Antriebsstrangvorrichtung nach einem der vorhergehenden Ansprüche,
**gekennzeichnet durch**
eine weitere hydraulische Schalteinheit (21), die dazu vorgesehen ist, eine Betriebsmittelüberschussmenge des Arbeitsdrucksystems (10) dem Schmier- und/oder Kühldrucksystem (13) zuzuführen.

13. Antriebsstrangvorrichtung nach einem der vorhergehenden Ansprüche,
**gekennzeichnet durch**
einen hydraulischen Schmierdruckregelschieber (22), der dazu vorgesehen ist, ein Schmier- und/oder Kühlniederdrucksystem (23) an das Schmier- und/oder Kühldrucksystem (13) anzubinden.

14. Verfahren für eine Antriebsstrangvorrichtung mit einem Arbeitsdrucksystem (10), das für einen Betriebsmitteldruck vorgesehen ist, mit zumindest einer ersten und einer zweiten Betriebsmitteldruckquelle (11, 12), die in zumindest einem Betriebszustand jeweils direkt mit dem Arbeitsdrucksystem (10) verbunden sind, und mit einem Schmier- und/oder Kühldrucksystem (13), das für einen von dem Betriebsmitteldruck im Arbeitsdrucksystem (10) abweichenden Betriebsmitteldruck im Schmier- und/oder Kühldrucksystem (13) vorgesehen ist, wobei in zumindest einem Betriebszustand die zweite Betriebsmitteldruckquelle (12) direkt mit dem Schmier- und/oder Kühldrucksystem (13) verbunden wird,
**dadurch gekennzeichnet**,
die zweite Betriebsmitteldruckquelle (12) in Abhängigkeit von einem Betriebsmitteldruck in dem Arbeitsdrucksystem (10) direkt mit dem Schmier- und/oder Kühldrucksystem (13) verbunden wird.

## Claims

1. Drive train device, in particular motor vehicle drive train device, comprising an operating pressure system (10) provided for an operating fluid pressure, at least one first and one second operating fluid pressure source (11, 12) which are directly connected to the operating pressure system (10) in at least one operating state, and a lubricating and/or cooling pressure system (13) provided for an operating fluid pressure in the lubricating and/or cooling pressure system (13) which deviates from the operating pressure in the operating pressure system (10), and further comprising a hydraulic switching unit (14) provided to connect the second operating fluid pressure source (12) directly to the lubricating and/or cooling pressure system (13) in at least one operating state,
**characterised in that**
the hydraulic switching unit (14) comprises a switching valve (15) provided to connect the second operating fluid pressure source (12) directly to the lubricating and/or cooling pressure system (13) as a function of an operating fluid pressure in the operating pressure system (10).

2. Drive train device according to claim 1,
**characterised in that**
the switching valve (15) is provided to connect the second operating fluid pressure source (12) permanently directly to the operating pressure system (10).

3. Drive train device according to claim 1 or 2,
**characterised in that**
the switching valve (15) is provided to connect the second operating fluid pressure source (12) switchably directly to the lubricating and/or cooling pressure system (13).

4. Drive train device according to at least claim 1,
**characterised in that**
the switching valve (15) is provided to switch automatically.

5. Drive train device according to at least claim 1,
**characterised in that**
the switching unit (14) comprises a valve spring adjusting means (16) provided to set a limit pressure for switching the switching valve (15).

6. Drive train device according to any of the preceding claims,
**characterised in that**
the switching unit (14) comprises at least one non-return valve (17) located between the operating pressure system (10) and the switching valve (15) and provided to prevent an operating fluid flow in the direction of the switching valve (15).

7. Drive train device according to any of the preceding claims,
**characterised in that**
the switching unit (14) comprises at least one non-return valve (18) located between the and/or cooling pressure system (13) and the switching valve (15) and provided to prevent an operating fluid flow in the direction of the switching valve (15).

8. Drive train device according to any of the preceding claims,
**characterised in that**
the second operating fluid pressure source (12) is designed as an independently driven operating fluid pump provided to make available an operating pressure which is controllable in an open and/or closed loop.

9. Drive train device according to any of the preceding claims,
**characterised by**
an open and/or closed loop control unit (19) provided to set an operating fluid pressure of the second operating fluid pressure source (12) as a function of a demand characteristic map.

10. Drive train device according to claim 9,
**characterised in that**
the open and/or closed loop control unit (19) is provided to adapt the demand characteristic map to a change of state in the lubricating and/or cooling pressure system (13).

11. Drive train device according to claim 10,
**characterised by**
a sensor unit (20) provided to make available a parameter for the adaptation of the demand characteristic map.

12. Drive train device according to any of the preceding claims,
**characterised by**
a further hydraulic switching unit (21) provided to feed a surplus quantity of operating fluid of the operating pressure system (10) to the lubricating and/or cooling pressure system (13).

13. Drive train device according to any of the preceding claims,
**characterised by**
a hydraulic lubricating pressure control valve (22) provided to connect a low-pressure lubricating and/or cooling pressure system (23) to the lubricating and/or cooling pressure system (13).

14. Method for a drive train device comprising an operating pressure system (10) provided for an operating fluid pressure, at least one first and one second operating fluid pressure source (11, 12) which are directly connected to the operating pressure system (10) in at least one operating state, and a lubricating and/or cooling pressure system (13) provided for an operating fluid pressure in the lubricating and/or cooling pressure system (13) which deviates from the operating pressure in the operating pressure system (10), wherein the second operating fluid pressure source (12) is directly connected to the lubricating and/or cooling pressure system (13) in at least one operating state,
**characterised in that**
the second operating fluid pressure source (12) is directly connected to the lubricating and/or cooling pressure system (13) as a function of an operating fluid pressure in the operating pressure system (10).

## Revendications

1. Dispositif de chaîne cinématique, notamment un dispositif de chaîne cinématique pour véhicule à moteur, comportant un système de pression de service (10), destiné à la mise sous pression d'un fluide de fonctionnement, au moins une première et une deuxième source de pression de fluide de fonctionnement (11, 12), chacune d'elles étant reliée directement au système de pression de service (10) dans au moins un état de fonctionnement, et un système de pression de lubrification et/ou de refroidissement (13) destiné à créer une pression de fluide de fonctionnement dans le système de pression de lubrification et/ou de refroidissement (13) différente de la pression de fluide de fonctionnement dans le système de pression de service (10), et une unité de régulation hydraulique (14) qui est conçue dans au moins un état de fonctionnement pour relier la deuxième source de pression de fluide de fonctionnement (12) directement au système de pression de lubrification et/ou de refroidissement (13), **caractérisé en ce que** l'unité de régulation hydraulique (14) présente une soupape de commande qui est conçue pour relier la deuxième source de pression de fluide de fonctionnement (12) directement au système de pression de lubrification et/ou de refroidissement (13) en fonction d'une pression de fluide de fonctionnement dans le système de pression de service (10).

2. Dispositif de chaîne cinématique selon la revendication 1, caractérisé en ce la soupape de commande (15) est conçue pour relier directement la deuxième source de pression de fluide de fonctionnement (12) au système de pression de service (10) de manière continue.

3. Dispositif de chaîne cinématique selon la revendication 1 ou la revendication 2, **caractérisé en ce que** la soupape de commande (15) est conçue pour commuter directement la deuxième source de pression de fluide de fonctionnement (12) au système de pression de lubrification et/ou de refroidissement (13).

4. Dispositif de chaîne cinématique selon au moins la revendication 1, caractérisé en ce la soupape de commande (15) est conçue pour commuter de manière autonome.

5. Dispositif de chaîne cinématique selon au moins la revendication 1, caractérisé en ce l'unité de commutation (14) présente un moyen de réglage du ressort de soupape (16) qui est conçu pour régler une pression limite servant à commuter la soupape de commande (15).

6. Dispositif de chaîne cinématique selon l'une des revendications précédentes, caractérisé en ce l'unité de commutation (14) présente au moins un clapet anti-retour (17) disposé entre le système de pression de service (10) et la soupape de commande (15), ledit clapet anti-retour étant conçu pour empêcher le flux de fluide de fonctionnement dans la direction de la soupape de commande (15).

7. Dispositif de chaîne cinématique selon l'une des revendications précédentes, caractérisé en ce l'unité de commutation (14) présente au moins un clapet anti-retour (18) disposé entre le système de pression de lubrification et/ou de refroidissement (13) et la soupape de commande (15), ledit clapet anti-retour étant conçu pour empêcher un flux de fluide de fonctionnement dans la direction de la soupape de commande (15).

8. Dispositif de chaîne cinématique selon l'une quelconque des revendications précédentes, **caractérisé en ce que** la deuxième source de pression de fluide de fonctionnement (12) est conçue comme une pompe de fluide de fonctionnement autonome qui permet de fournir une pression de fluide de fonctionnement de commande et/ou réglable.

9. Dispositif de chaîne cinématique selon l'une quelconque des revendications précédentes, **caractérisé en ce qu'**une unité de commande et/ou de régulation (19) est conçue pour régler une pression de fluide de fonctionnement de la deuxième source de pression de fluide de fonctionnement (12) en fonction d'un diagramme caractéristique souhaité.

10. Dispositif de chaîne cinématique selon la revendication 9, **caractérisé en ce que** l'unité de commande et/ou de régulation (19) est conçue pour adapter le diagramme caractéristique souhaité au système de pression de lubrification et/ou de refroidissement (13) en fonction d'un changement d'état.

11. Dispositif de chaîne cinématique selon la revendication 10, **caractérisé par** une unité de détection (20) qui est conçue pour fournir un paramètre visant à adapter le diagramme caractéristique souhaité.

12. Dispositif de chaîne cinématique selon l'une quelconque des revendications précédentes, **caractérisé en ce qu'**une autre unité de régulation hydraulique (21) qui est conçue pour acheminer une quantité excédentaire de fluide de fonctionnement du système de pression de service (10) au système de pression de lubrification et/ou de refroidissement (10).

13. Dispositif de chaîne cinématique selon l'une quelconque des revendications précédentes, **caractérisé par** un tiroir de régulation hydraulique de la pression de lubrification (22) qui est conçu pour relier un système de basse pression de lubrification et/ou de refroidissement (23) au système de pression de lubrification et/ou de refroidissement (13).

14. Procédé pour un dispositif de chaîne cinématique comprenant un système de pression de service (10) qui est conçu pour une pression de fluide de fonctionnement, au moins une première et deuxième sources de pression de fluide de fonctionnement (11, 12) qui sont chacune reliées directement au système de pression de service (10) au moins dans un état de fonctionnement et un système de pression de lubrification et/ou de refroidissement (13) qui est destiné à créer une pression de fluide de fonctionnement dans le système de pression de lubrification et/ou de refroidissement (13) différente de la pression de fluide de fonctionnement dans le système de pression de service (10), dans au moins un état de fonctionnement la deuxième source de pression de fluide de fonctionnement (12) étant reliée directement au système de pression de lubrification et/ou de refroidissement (13), **caractérisé en ce que** la deuxième source de pression de fluide de fonctionnement (12) est directement reliée au système de pression de lubrification et/ou de refroidissement (13) dans le système de pression de service (10) en fonction d'une pression de fluide de fonctionnement.
